# EUROPEAN PATENT APPLICATION

(11) **EP 2 919 059 A1**
(43) Date of publication of application: **16.09.2015**
(21) Application number: 14275062.9
(22) Date of filing: 14.03.2014
(51) Int. Cl.: G02B 27/01, G02B 6/08, G02B 27/00

(54) **Fibre-optical diffuser for displays**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

An optical diffuser including a fibre-optical piece (1) comprising: a first face (2) and a second face (3); a plurality of substantially parallel optical fibres (4) each extending along a respective optical axis from an input end of the optical fibre exposed at the first face to an output end of the optical fibre exposed at the second face. The optical axes of each of the plurality of optical fibres are inclined at a common oblique angle relative to at least one of the first face and the second face, such that light (7) incident substantially perpendicularly upon the at least one face enters the optical fibres in a direction oblique to the optical axes.

## Description

### FIELD OF THE INVENTION

The invention relates to optical diffusers for use in optical displays, such as projection display devices. The invention is relevant to, for example, helmet-mounted display (HMD) devices and methods.

### BACKGROUND

Projection display technologies may often use rotationally non-symmetrical optics to fit around obstacles. An example is helmet-mounted display (HMD) optics used to direct image-bearing light from an image source to a projection screen on a helmet. The optics may incorporate a display device that has a restricted Etendue, which is too small to fully illuminate the exit pupil of the projection optics. This is one example of a scenario in which a restricted Etendue can arise.

The Etendue of an optical system can be defined as follows. From the point of view of a light source, it is the area of the source times the solid angle subtended by the entrance pupil of the system as seen from the source. From the system point of view, the Etendue is the area of the entrance pupil times the solid angle the light source subtends as seen from the pupil. A perfect optical system produces an image with the same Etendue as the source. The term has a general meaning of "geometrical extent". Other names for this property are "acceptance", "throughput", "light-grasp", "collecting power", and "optical extent", as are well known in the art.

The invention aims to address these limitations.

### BRIEF DESCRIPTION

The limited Etendue may be improved by projecting the display image onto a diffuser which increases the Etendue before the image is projected into the eye by rotationally non-symmetrical lenses.

However, the lack of rotational symmetry means that the light enters the diffuser and a different angle than it is viewed from. The diffuser preferably receives light with the projector geometry and projects light into the viewing optics geometry. That is means taking account of the offset angle between the optical axes/geometry of the projector optics and the image viewing optics.

By matching the angles between these two optical sections, or at least reducing the difference between them, the light may be coupled between them with greater geometrical efficiency leading to improvements in brightness and the uniformity of the projected image.

At its most general, the invention utilises a fibre optic device which is rotationally asymmetrical, in order to provide diffusion at an offset angle. This is suited to matching (or at least improving the coupling between) the projection optic geometries and viewing optic geometries. It has been found that this provides a minimal colour variation as an added benefit.

In a first aspect, the invention provides an optical diffuser including a fibre-optical piece (e.g. plate) comprising: a first face (e.g. plate face) and a second face (e.g. plate face); a plurality of substantially parallel optical fibres each extending along a respective optical axis from an input end of the optical fibre exposed at the first face to an output end of the optical fibre exposed at the second face; wherein said optical axes of each of said plurality of optical fibres are inclined at a common oblique angle relative to at least one of the first face and the second face, such that light incident substantially perpendicularly upon the at least one said face enters said optical fibres in a direction oblique to said optical axes.

The input end of each said optical fibre may present a substantially plane input face which is substantially parallel to said first face of the fibre-optical piece.

The output end of each said optical fibre may present a substantially plane output face which is substantially parallel to said second face of the fibre-optical piece.

The first face of the fibre-optical piece is preferably substantially plane. The second face of the fibre-optical piece may be substantially plane. Thus, the first and second faces of the fibre-optical piece may, respectively, be a first plate face and a second plate face.

The first face of the fibre-optical piece may be substantially parallel to said second face of the fibre-optical piece. The first face of the fibre-optical piece may be angled or oriented differently to the second face of the fibre-optical piece such that the two are not parallel and the one is inclined relative to the other. The angle of inclination of the first face of the fibre-optical piece relative to the optical axes of the fibres determines the angles by which rays of light are transmitted into the fibres, when the optical diffuser is illuminated by a given orientation of illumination. Because the fibres act to project those angles in a substantially rotationally symmetrical output beam, the angle of the first face relative to the optical axes of the optical fibres will substantially increase the effective Etendue of the optical system. The angle/inclination of the second face may preferentially refract the resultant diffusion pattern in a different direction. Therefore the selection/choice of different inclination angles of the optical axis of the optical fibres relative to the first and second faces of the fibre-optical piece respectively, offers greater choice over the amount of optical diffusion and the direction into which it is scattered.

The first and/or second face of the fibre-optical piece may be curved. Thus, the angle of inclination of the optical axes of the optical fibres relative to the local surface of the first and/or second faces may vary across the aperture of the optical diffuser. The advantage is twofold: first the flexibility of choice mentioned above may be applied differentially across the aperture of the optical diffuser; and secondly the curved shapes may better interact with the optical aberrations in optical sub-systems used to project light onto the optical diffuser and/or optical sub-systems used to project light away from the optical diffuser.

The input end of each said optical fibre may present a substantially plane input face. The output end of each said optical fibre may present a substantially plane output face which is substantially parallel to said input face thereof.

The input end of each one of said optical fibres may present a substantially plane input face which is substantially parallel to a said input face of each of the other said optical fibres.

The output end of each one of said optical fibres may present a substantially plane output face which is substantially parallel to a said output face of each of the other said optical fibres.

The plurality of substantially parallel optical fibres are preferably fixed (e.g. fused) together side-by-side.

The aforesaid common angle preferably has a value exceeding about 3 degrees.

The optical diffuser may comprise a diffractive surface preparation(s) on the first or/and second surface of the fibre-optical piece. The first and second faces of the fibre-optical piece may be arranged to be not parallel (e.g. the plane of one may be inclined to the plane of the other). The first and/or second face(s) of the fibre-optical piece may be arranged to have curved surfaces. The common features of these optional features is that the internal optical properties of the optical diffuser act to increase the effective Etendue of the optical beam and project the output beam at substantially at a different angle to that of the input beam. These optional features may act to better match the core characteristics of the internal diffusion to an optical system into which it may be integrated.

For example, the optical diffuser may comprise a diffuser preparation coated onto the first face of the fibre-optical piece. This may be an optical diffraction grating arranged to diffuse incident light by diffraction. Preferably such a diffraction grating may be arranged to diffract incident light in principally, predominantly or mostly into one angular direction relative to the grating (e.g. one diffractive order, such as the first order of diffraction) for entry into the fibre-optical piece, alone. The action of the internal structure of the fibre-optical piece may thus replicate that directional light pattern over multiple angles so as to diffuse the output beam into a generally rotationally symmetrical pattern. The optical diffuser may thereby further increase the effective Etendue of an optical system. An advantage of this arrangement is that a relatively simple diffractive structure may be employed to diffuse the output beam in many directions with high efficiency.

For example, the optical diffuser may comprise a diffuser preparation coated onto the second face of the fibre-optical piece. This may be an optical diffraction grating arranged to diffuse incident light by diffraction. Preferably such a diffraction grating may be arranged to diffract incident light from optical fibres in principally, predominantly or mostly into one angular direction relative to the grating (e.g. one diffractive order, such as the first order of diffraction) for output from the optical diffuser. The action of the internal structure of the fibre-optical piece may produce a generally rotationally symmetrical output light beam that may then be expanded in the one angular direction only by the diffraction grating. The overall effect may be to produce an elliptical output beam that is offset sideways in one direction. An advantage of this arrangement is that the relative alignment of the internal structure of the optical diffuser with the direction of the grating lines of the diffraction grating provides multiple possible/selectable alignments of the elliptical axes of the output beam with its offset.

The first face of the fibre-optical piece or the second face of the fibre-optical piece, or both, may be fabricated with a curved shape to facilitate the compensation of aberrations in the optics projecting light onto input face, and / or in the optics projecting light towards an observer from the output face.

The first face of the fibre-optical piece may be angled relative to the second face of the fibre-optical piece to better focus image-bearing light across the field of view. That is to say, the appropriate choice of angle may assist in coupling optical elements that provide input light to the fibre-optical piece, to optical elements that the fibre-optical piece subsequently outputs light to - such as in a projection system.

The angle of the second (e.g. output) face of the fibre-optical piece relative to the optical axis of the fibres may be arranged to refract the output (projected) light pattern in a direction that is adapted to the geometry of an output projection optics (if used) arranged to receive that output light.

A diffusing optical coating may be added to the second (e.g. output) face of the fibre-optical piece to better adapt the far field light pattern to an output projection optics (if used) arranged to receive that output light.

The plurality of substantially parallel optical fibres may have a shape whereby their cross-section is not circular.

The plurality of substantially parallel optical fibres may be arranged such that the size (e.g. diameter) of the fibres and the space between them (e.g. transverse distance/separation between neighbouring fibres) varies (e.g. increases or decreases) throughout the depth of the fibre array (e.g. from the input end to the output ends of the fibres).

The plurality of substantially parallel optical fibres may comprise axially twisted fibres in which the twisted fibres are structured with an axial twist about their optical axis.

The plurality of substantially parallel optical fibres may each be bent whereby the axis of the optical fibres presented at the first face of the fibre-optical piece is not parallel to the axis of the optical fibres presented at the second face of the fibre-optical piece.

In a second aspect, the invention may provide a projection display apparatus comprising: a light source means for generating light to be displayed; an optical diffuser as described above arranged to receive at said first plate face said light from said light source and for outputting said light from said second plate face, for display by projection.

The light source means may define a display optical axis along which said generated light is transmitted to the optical diffuser. The projection display apparatus may include projection optical means defining a projection optical axis and arranged for receiving said output light from said second plate surface of the optical diffuser and for projecting the received light for display by projection. The projection optical axis is preferably oblique to the display optical axis. The projection display apparatus may include image-forming optics (e.g. a lens or lenses) arranged to focus light from the light source upon one of the first and second faces of the fibre-optical piece. This may be such that light rays from the light source reach the face of the fibre-optical piece, and the optical fibres there, in the form of a light cone.

The projection display apparatus may include a projection screen onto which said projection optical means is arranged to project said light for display thereat.

The projection display apparatus may include a mirror onto which said projection optical means is arranged to project said light such that, when reflected, the light may be perceived by a viewer. The mirror may be a curved mirror onto which said projection optical means may be arranged to project said light for reflection to an observer. The light may preferably be image-bearing light which may convey information for perception by the viewer.

In a third aspect, the invention may provide a helmet-mounted display comprising an optical diffuser as described above, or a projection display apparatus as described above.

In a fourth aspect, the invention may provide a method of diffusing light using an optical diffuser, the method comprising: providing a fibre-optical piece (e.g. a plate) including a first face and a second face between which extend a plurality of substantially parallel optical fibres each extending along a respective optical axis from an input end of the optical fibre exposed at the first face of the fibre-optical piece to an output end of the optical fibre exposed at the second face of the fibre-optical piece wherein said optical axes of each of said plurality of optical fibres are inclined at a common oblique angle relative to at least one of the first face of the fibre-optical piece and the second face of the fibre-optical piece; directing light so as to be incident (e.g. substantially perpendicularly) upon the at least one said face of the fibre-optical piece to enter said optical fibres in a direction oblique to said optical axes thereby to provide said light in diffused form at the second face of the fibre-optical piece.

In a fifth aspect, the invention may provide a method of projecting light for display comprising: generating light to be displayed; transmitting said light along a display optical axis to an optical diffuser as described above; receiving said transmitted light at said first face of the fibre-optical piece of the optical diffuser; outputting said light from said second face of the fibre-optical piece thereof in a direction along a projection optical axis towards a projection optical means which defines the projection optical axis to be oblique to the display optical axis; receiving at the projection optical means said output light from said second face of the fibre-optical piece and projecting the received light for display by projection; and, projecting said light upon a projection screen or mirror for display or reflection thereat. The method may comprise projecting said light upon a curved mirror for reflection to the observer. The plane of the first face of the fibre-optical piece of the optical diffuser may be oriented substantially perpendicular to the display optical axis.

In a sixth aspect, the invention may provide a method for manufacturing an optical diffuser comprising: providing a fibre-optical face plate comprising a plurality of substantially parallel optical fibres each extending along a respective optical axis from an input end of the optical fibre exposed at a first face of the face plate to an output end of the optical fibre exposed at the second face of the face plate; re-shaping at least one of the first face and said second face such that said optical axes of each of said plurality of optical fibres are inclined at a common oblique angle relative to the at least one of the first face of the fibre-optical piece and the second face, such that light incident substantially perpendicularly upon the re-shaped at least one said face enters said optical fibres in a direction oblique to said optical axes.

### BRIEF DESCRIPTION OF THE DRAWINGS

Figure 1 schematically illustrates a perspective view of a fibre-optical faceplate;
Figure 2 schematically illustrates a side view of the fibre-optical faceplate of Figure 1;
Figures 3 and 4 schematically illustrate a side view of the stages of manufacture of a fibre-optical faceplate of Figure 1;
Figure 5 schematically illustrates a perspective view of an optical fibre of the faceplate of Figure 1;
Figure 6 schematically illustrates the operation of a helmet-mounted display (helmet omitted for clarity);
Figure 7A schematically illustrates a computer simulation of an optical fibre or
Figure 5;

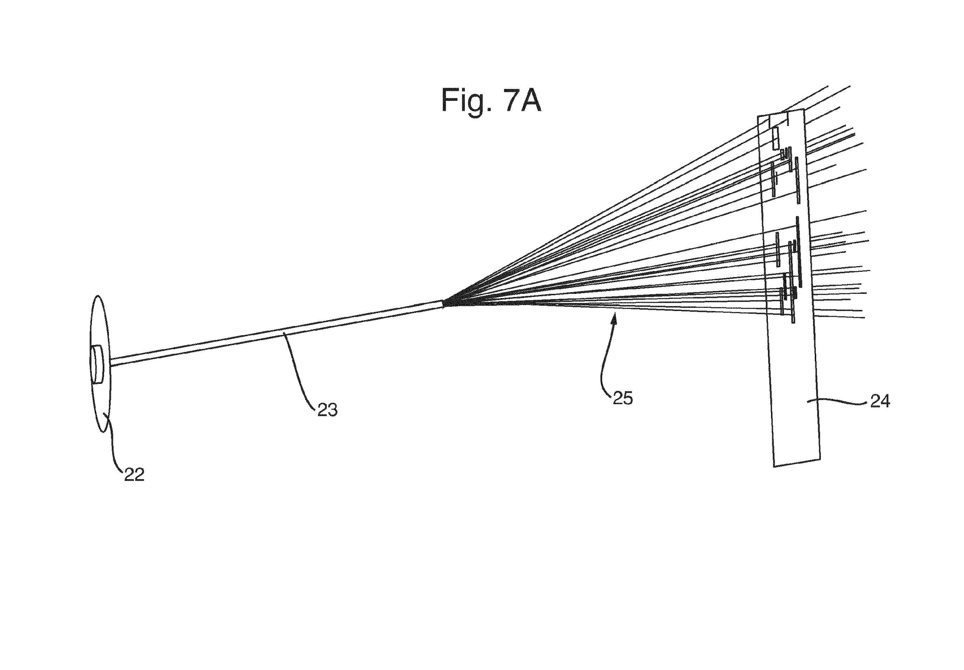

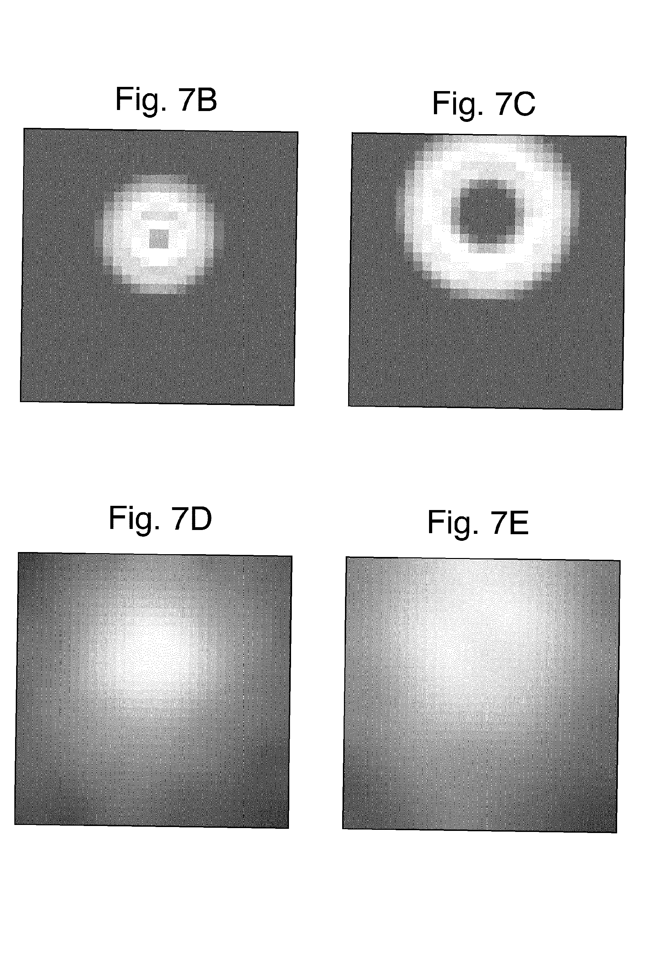

Figures 7B to 7E graphically illustrate the output light distribution from an optical fibre according to the simulation of Figure 7A.

### DETAILED DESCRIPTION

In the drawings, like items are assigned like reference symbols.

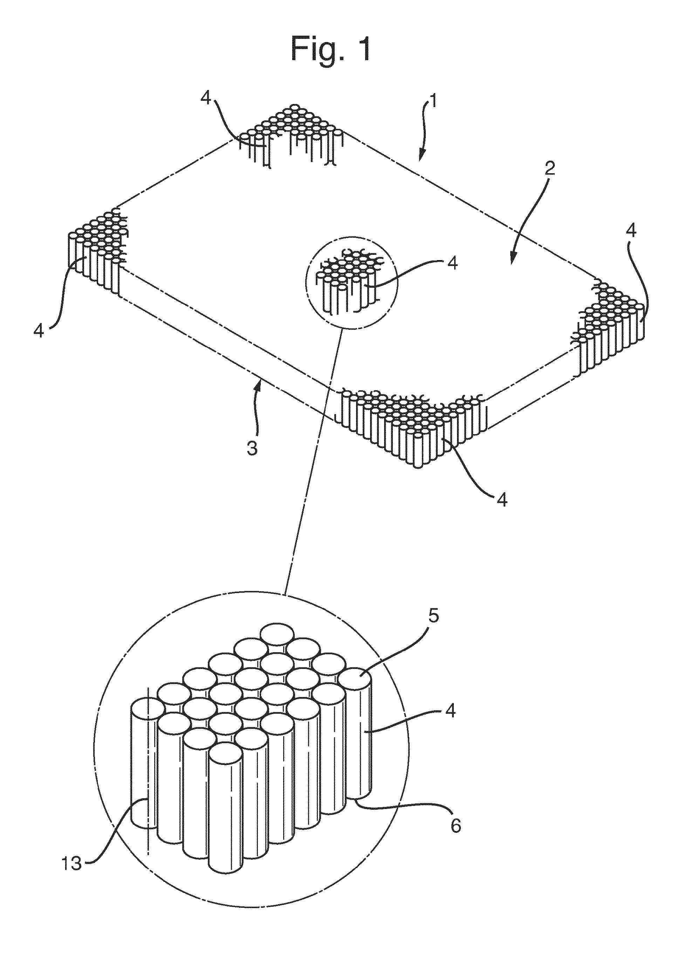

Figure 1 schematically illustrates an optical diffuser 1. The optical diffuser is a rectangular plane, transparent plate including a first plate face 2 and an opposite, plane-parallel second plate face 3. The two plate faces are bounded by a rectangular peripheral edge. The plate is formed from a multiplicity of substantially parallel, linear optical fibres 4 each extending in parallel along a respective optical axis of the given fibre, from the first plate face to the second plate face.

The optical fibres are fused together side-by-side in parallel orientation such that the optical axes of all fibres are substantially parallel.

Each optical fibre presents a substantially plane input face 5 at an input end of the fibre, and a substantially plane output face at the output end of the fibre 6, which is parallel to the input face. The input faces of each of the optical fibres are mutually plane-parallel and define the planar first plate surface. Similarly, the output faces of each of the optical fibres are mutually plane-parallel and define the planar second plate surface.

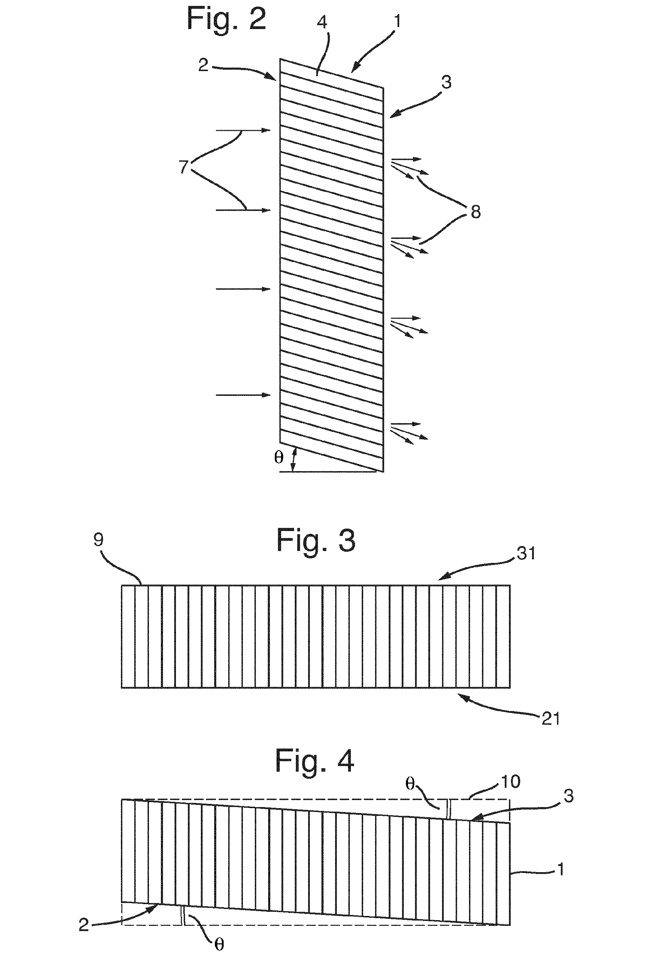

Referring to Figure 2, there is shown a schematic side-view of the optical diffuser, together with light 7 incident perpendicularly upon the first plate face, and diffused light 8 output from the second plate face. The optical axes 13 of the optical fibres, which corresponds with the longitudinal fibre axis of each respective fibre, is inclined at a common angle θ of about 7.5 degrees relative to the plane of the first and second plate faces (2, 3). Other angles (e.g. 4.5 degrees) may be employed in alternative embodiments. The result is that the incident light 7 enters each of the optical fibres 4 in a direction oblique by this common angle, relative to the common optical axis of each fibre.

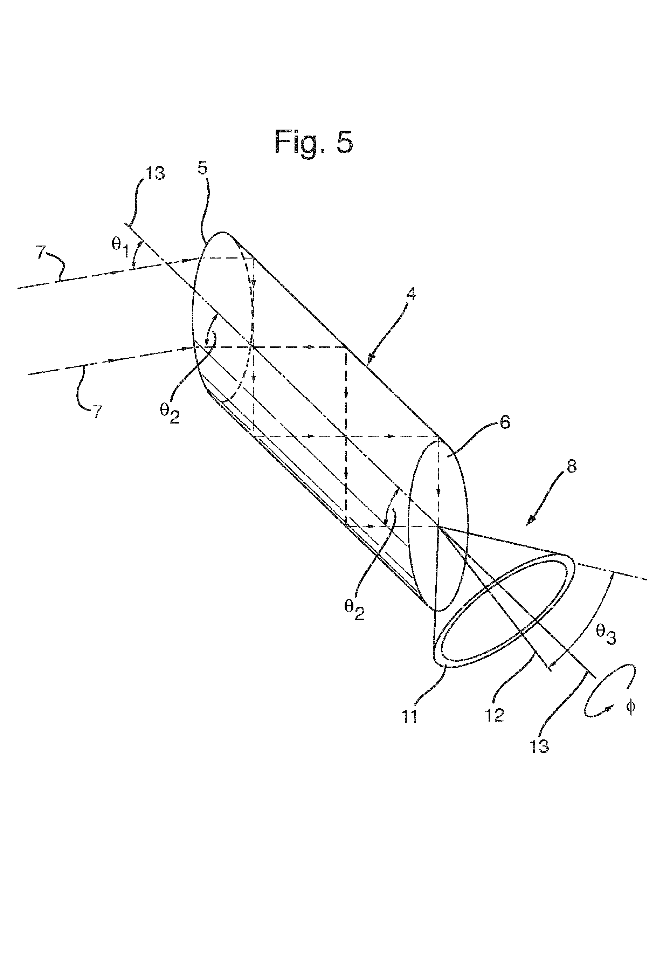

Figure 5 schematically illustrates the effect of this oblique entry angle. In general, light that enters an optical fibre 4 is refracted at an input angle as it refracts through the input face.

The light intersects the cylindrical surface of the fibre internally at multiple positions along its length as it propagates therealong, such that multiple reflections at the multiple respective positions create a cone of ray angles from a single input ray angle. The light then reached the output face of the optical fibre where it refracts through the output face at an output angle generally different to the input angle.

The two rays of light 7 light shown in Figure 5 enter the fibre in a parallel direction, such that before refraction they make a common angle θ₁ with the optical axis 13 of the fibre and after refraction they make a common angle θ₂ with the optical axis 13 of the fibre. The two rays experience a different number of reflections within the fibre such that they exit at different positions on the projected light pattern 11. The action of diffraction and different refraction at the input face over different wavelengths of light broadens the shape of the projected light pattern 11, so it is drawn with a thicker geometry.

The action of refraction and reflection maintains the angle of the output rays to closely match the angle of the input rays, so the size of the projected light pattern 11 has a substantially the same output semi-angle of θ₂ within the fibre, which is refracted at the output face to an angle θ₃. All of the possible rays entering the fibre with this angle will experience different intersection points with the cylindrical surface of the fibre internally, and will experience differing numbers of reflections; such that the rays are diffused through 360 degrees in azimuth angle Φ about the optical axis 13 to define a hollow cone 11 of light. The shape of the projected beam pattern is therefore substantially a conical shape of angular diameter 2xθ₁. The conical output beam will substantially have an axis of rotational symmetry 12. Due to refraction at the output face of the fibre, this axis of the output beam is no longer parallel to the axis of the fibre 13.

It should be noted that it is not essential to the invention that the rays 7 intersect each other within the fibre, nor that they intersect each other at the output face 6. The optical diagram is a schematic simplification intended to aid an understanding of the invention and the skilled in the art will recognise that the shape of the output light cone 11 in the drawings represents the far field projected light pattern, which is measured sufficiently far away from the fibre for the size of the output face 6 to be insignificant. This optical geometry causes a nominal hollow cone of light to be projected from the output face. The hollow centre of the projected light pattern 11 is filled in by projecting rays 7 into the fibre from a range of angles, so that the overall effect is to project a filled in cone of light. This may be achieved by focusing a cone of light onto the input face 5. The focusing effect, over an array of fibres, causes the image information in the input beam to be maintained as the light is transmitted through the array of fibres. The image information is then projected out of the fibre array with an increased effective Etendue.

In a preferred embodiment the fused fibre optic faceplate has with parallel sides and comprises optical fibres having a diameter of 4 microns. The optical thickness of the faceplate is 0.4mm. The fibres are oriented at an angle of 7.5 degrees to the surface normal of the faceplate. This will achieve the required light output profile of light from the second plate face when the first plate face is illuminated with a cone of illumination light subtending an 11 degrees (diameter) cone angle.

In order to illustrate the principles of operation of an example of the optical diffuser, an optical model is described below that was generated as a hypothetical optical device that represents the characteristics of the array of fibres of the plate. In this model, a light source is used to illuminate a single fibre and the model the fibre was made large to illustrate the effects. The fibre (in isolation) was angled at either 4.5 degrees or 7.5 degrees relative to the notional input face of the notional diffuser it was assumed to be a part of, and relative to the input direction of the input light. The distribution of light flux with angle was calculated using the ray trace modelling to give the variation of light flux with ray angle. Figure 7A shows the simulated set-up.

In the calculation the input light source was arranged to over illuminate the input face (entrance aperture) of the single fibre model with light representing an 11 degree diameter cone angle. Rays outside the aperture of the fibre are blocked. The source was modelled to have a white light "D65" spectrum, of the type well known in the art of optical modelling/simulation. The single fibre represents the properties of a fibre 5 of the optical diffuser that is placed at an angle to the input and output faces of the diffuser. Rays entering the fibre are refracted at the input face 5, reflected through the fibre 4 to the output face 6, and refracted out of the output face 6 as diffused light 8. A simulated output detector is used to capture each ray and integrate the transmitted flux over the angle of the projected ray. The model uses the characteristics of only one fibre to accurately model the angular characteristics of millions of such fibres placed adjacent to each other in the optical diffuser 1.

Figures 7A to 7E show the results of ray-tracing calculations for the output distribution of light intensity from a given optical fibre 4 of the plate. The input light 7 is incident upon the input end 5 of the fibre.

Figure 7A shows the theoretical model used to represent the far-field light pattern produced by the fibre. The source 22 projects rays that uniformly irradiate an 11 degree cone angle. The angled fibre 23 is simply a rod of suitable refractive index in the region of 1.8. By making the faces of the rod parallel to each other, a true fused fibre optic device can be reconstructed in the model by stacking more angled fibres adjacent to each other. And because the output of the single angled fibre 23 is only analysed in the far field angle space, the modelling results from the single fibre 23 apply equally well to the whole array of said fibres. Therefore a single angled rod 23 can be used to calculate the effective far field light pattern 11 of a collection of parallel fibres, as the design parameters of the single fibre are varied. A simulated output detector 24 is used to capture the modelled rays and to record the variation of the flux of light with angle of incidence on the detector, which effectively measures the far field light pattern 11.

Figure 7B shows the modelled light distribution at the detector 24 for a 4.5 degree inclination angle of the fibre 23. It shows that the output cone of light 25 has been broadened by the variation of the ray angles over the 11 degree diameter input cone. The angles of the various rays entering the optical diffuser vary across the 11 degree input cone angle. This partially fills in the hollow centre of the far field pattern 11. The centre of the square image frame in Figure 7B is where rays would intersect the hypothetical detector if they were undeviated i.e. the angle of the rays entering the fibre 23 are, in that position, the same angle as the same rays leaving the fibre 23. It can be seen that the perimeter of the far field light pattern 11 (and not the centre of the far-field pattern) illuminates this centre point of the square image frame (i.e. the square detector surface, 24), and that the light is both broadened in angular extent (i.e. showing an increase in effective Etendue), and the centre of the far field light pattern is offset. These effects are more clearly demonstrated by comparing Figure 7C with Figure 7B. The only difference in these models is that the angle of inclination of the fibre is increased to 7.5 degrees. This clearly shows a wider pattern 11, which results from the action of the fibre inclination angle in increasing the Etendue of the output beam of light. The comparison of Figure 7C with 7B also clearly shows the effect of increasing the fibre angle increasing the angular offset in the far field light pattern11. Therefore the action of the angle of the fibres to the input and output faces of an optical diffuser comprising a multitude of such fibres, is clearly shown to increase the effective Etendue of the output beam and impose an offset/deviation in the angular direct the output beam from the diffuser.

It will be appreciated by the skilled person that whilst the optical property generally known as the Generalised Lagrange Invariant is not increased by the action of refraction and reflection in the fibre, the angular size of the far field light pattern 11 is increased. This apparent conflict, whereby the overall optical system has an effective increase in Etendue, but the ray trace through the fibre array does not have an increase in the Etendue, does not actually occur because the output face of each optical fibre 4 is non-uniformly illuminated for each set of parallel input rays 7. To apply a simple but illustrative analogy, the output optical field maybe thought to act like a kaleidoscope with fine structure on the optical field across the aperture of output face 6. However, this fine structure is too small to be seen by the observer 21, and is averaged to a more uniform distribution of image information by the action of encoding image bearing information on the input beam with coarser resolution than the dimensions of the aforesaid light structure. In addition, diffraction within the fibre causes the light structure to be averaged so as to fill in the darker areas and reduce the brighter areas; namely diffraction within the fibre. For these two reasons, the fine structure of the model ray trace at the output face of the fibre is generally not relevant to the application of the invention. The optical diffuser 1 therefore acts to effectively increase in the Etendue of the optical system. The model presented here is to help aid a better understanding of the general principles involved when implementing the invention.

The alignment of the perimeter of the far field light pattern 11 with the undeviated direction of light is a result of keeping the input face 5 and output face 6 parallel. Should the output face 6 not be parallel to the input face 5, then the far field light pattern can be refracted by the output face in a different direction.

Of course, an actual optical diffuser would be constructed by placing and fixing multiple fibres parallel to each other as described above. Each of the multiple fibres would have its input and output faces coplanar with the input and output faces of the other fibres. The overall geometry in preferred embodiments may be of a flat and parallel plate whose fibres are all at a common angle to the input and output faces of the substrate of the diffuser. Alternative arrangements are possible with a plate having non-parallel input and output faces (5, 6), or one with a curved input face 5 and/or output face 6.

It is to be noted that the results shown in figures 7B and 7C are from a calculation in which the effects of diffraction at the output end of the fibre 23 are not included. However, the results shown in figures 7D and 7E do include a model of diffraction and show how the hollow cone of light is filled-in. In Figure 7D, the angle of inclination was increased to θ=4.5 degrees (e.g. θ₁ and θ₃), and in Figure 7E, the angle of inclination was increased to θ=7.5 degrees (e.g. θ₁ and θ₃). Each of the overall square images in figures 7B to 7E subtended, within the calculation, 30 degrees on a side (i.e. 30x30 degrees) to the output end of an optical fibre.

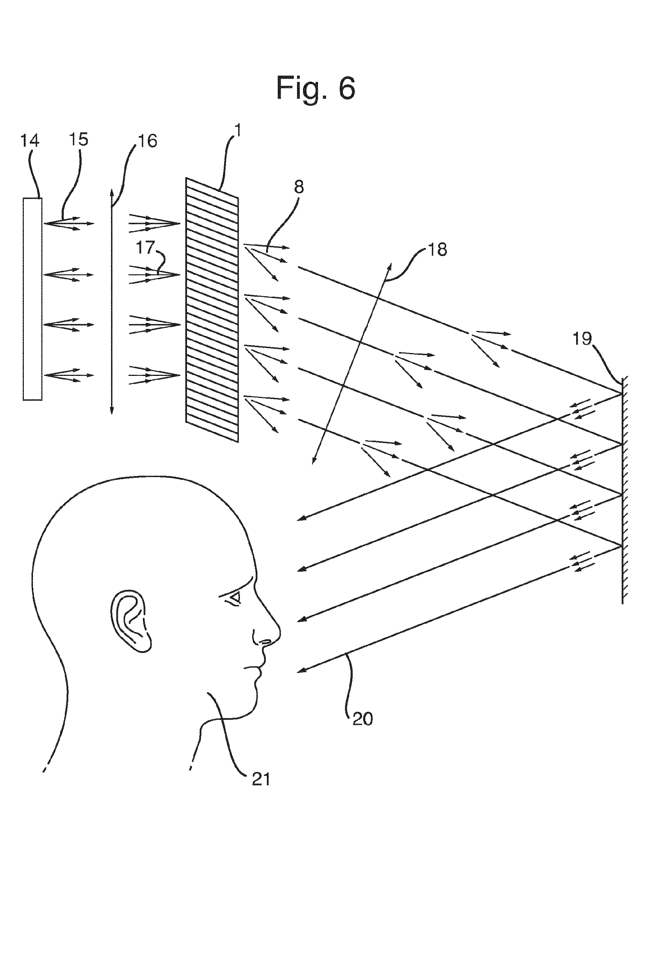

Figure 6 schematically illustrates an application of these beneficial consequences in the form of a helmet-mounted display (HMD) which employs an optical train lacking rotational symmetry. This lack of symmetry arises because of the need to direct light from an optical display 14 to some extent around the helmet for projection onto a projection display mirror 19 (e.g. a helmet visor) that reflects the image-bearing light to be viewed by the helmet wearer.

The helmet mounted display (helmet not shown, for clarity) comprises an optical display screen arranged for generating image-bearing light 15 to be displayed at the eye of the wearer after reflection from a helmet visor 19 of the helmet. A train of display optical element(s) 16 such as a lens/lenses and/or a mirror/mirrors as appropriate is arranged to receive image-bearing light from the display screen and to transmit that light along a display optical axis 17 defined by the train of display optical elements, to an optical diffuser 1 as described above. The light is focussed by the display optical elements 16 onto the first (input) surface of the optical diffuser as an image.

It is to be understood that in the schematic representation of Figure 6, all rays within a particular ray bundle input to the optical sub-system 16 may or may not correspond with all rays within a given ray bundle projected through the optical sub-system 16. Rays in the latter ray bundle may originate from other rays within ray bundles other than the former ray bundle.

The optical diffuser 1 is arranged along the display optical axis 17 to receive the transmitted light at the first plate face 2 of the optical diffuser oriented substantially, though not necessarily, perpendicular to the display optical axis. Consequently, the optical diffuser may output the light from its second plate face 3 in a direction along a projection optical axis 8 towards a projection optical train 18 which defines the projection optical axis. The projection optical train comprises optical element(s) 18 such as a lens or lenses and/or a mirror or mirrors as appropriate. The projection optical axis is oblique to the display optical axis. Image-bearing light received at the projection optical train 18 from the second plate surface is projected thereby for display an internal wearer-facing surface of the helmet visor which serves as a mirror for display to the wearer.

Due to the non-rotational symmetry of the optical system, it is not necessary for the optical axes 8 or 17 (Figure 6) to be oriented at 90 degrees to the plane of optical diffuser 1 (i.e. perpendicular), nor to intersect the centre of the image formed on the input face 5 or output face 6 of said optical diffuser.

Figure 6 shows that the rays input to the optical diffuser 1, surrounding the optical axis 17, are drawn at a smaller angular range than the rays leaving the optical diffuser 1. This is schematically indicating the effective increase in Etendue caused by the action of the individual fibres within the fibre array. This is advantageous in increasing the size of the light pattern that irradiates the observer's eye. In addition, the action of the angled fibres redirects the light towards the best position to illuminate the observer's eye. This combination is advantageous in illuminating the observer's eye over all positions that it is likely to be placed, whilst keeping the illuminated area to the smallest size; thus the eye is illuminated under all conditions with the brightest image.

In this way, the optical diffuser serves to improve the efficiency of the coupling of light from a display optical train/geometry to a projection optical train/geometry when those two geometries are offset and do not share a rotational symmetry. The lack of symmetry can cause a reduction in the Entendu of the projection optical train relative to the display optical train, and this may be counteracted, at least to some extent, by the diffusing and controlled deviating effects of the optical diffuser.

Figures 3 and 4 schematically illustrate a method for manufacturing the optical diffuser. This includes initially providing a rectangular fibre-optical face plate comprising a plurality of substantially parallel optical fibres bound together side-by-side with each extending along a respective optical axis from an input end of the optical fibre exposed at a first face 21 of the face plate to an output end of the optical fibre exposed at the second face 31 of the face plate. The optical axes of each of the fibres are perpendicular to the plane of each of the first and second plate faces - which are mutually parallel. This type of fibre-optical face plate is readily available to the skilled person. They are commonly available from a variety of suppliers who use different methods in their fabrication. One such supplier is Schott AG, in Germany. They may be purchased in a variety of forms. A typical method of their manufacture is to draw a single fibre from molten glass and allow it to cool and solidify. Two glasses are drawn together to provide a fibre core and an outer fibre cladding. The fibre is wound round a large diameter drum taking care that it lays down in an ordered fashion. The collection of fibres is heated to melt the cladding, allowing the cladding of one fibre to fuse together with that of its neighbouring fibres. This fuses the fibres into one body. The arrangement of fibres is sufficiently accurate to enable the transmission of an image from one face of the part to another face without the image breaking up. The fused part of the fibres is removed from the drum and cut, ground and polished to its final form. The fibres are typically quite small to enable high resolution image transmission. However, they are usually too large to create a single optical mode inside the fibre core. The cladding may be treated with an absorbing material to prevent light passing from one fibre to an adjacent fibre.

The method includes re-shaping each of the first face 21 and the second face 31 to remove portions 10 of the material of each surface in progressively increasing amounts to one side of each surface. This may be done by grinding and polishing the surfaces of the plate in the appropriate regions.

The re-shaping is done to adjust the inclination of each of the first and second surface such that they remain plane, and mutually parallel, but inclined to the original orientations of those surfaces by an angle θ. This inclination is with respect to the optical axes of each of the plurality of optical fibres. The resulting inclined surfaces (2, 3), after appropriate amounts of grinding and polishing, are inclined at a common angle θ relative to both of the first face 2 and the second face 3, such that light incident substantially perpendicularly upon either re-shaped face enters the optical fibres in a direction oblique to the optical fibre axes.

In this way, by means of first making a thicker plate whose fibres are at 90 degrees to the input and output faces, and then grinding and polishing new faces that are at the requisite angles to the original faces, the optical diffuser may be manufactured. This involves conventional grinding and polishing techniques with relatively simple metrology.

The input face 5 and output face 6 may be ground and polished to a curved shape. The curved shape could be spherical, aspherical, cylindrical, toroidal or free form shapes. These terms are readily understood by one skilled in the art, not least because they are well defined in well-known software used to model fibre arrays.

Thus, the invention may address a problem that arises in HMDs to increase the Etendue of an optical system. The result is to increase the exit pupil size to allow for comfortable viewing, and as the user's eye moves across the exit pupil, a reduction in false colouration of the viewed field is perceived due to the use of only refraction to increase the Etendue, which makes the optical properties more stable with colour.

Preferred embodiments of the invention may use a fused fibre optic device, which is an optical substrate, of any desired shape, comprising e.g. millions of fibres arranged to transmit an image from one side to the other. In its most basic form, each input ray undergoes multiple reflections within each fibre, and the output angle generally equals the input angle. A significant effect is the diffraction from each separate fibre. Each ray going through the fibre at slightly different angles or positions experiences a different optical path, and therefore a different phase retardation, which averages any localised interference effects within the fibre. Thus, each fibre acts in part as an incoherent aperture. Because of its necessarily small size, this diffracts the output light over a significant further angle.

The fibres of the optical substrate are positioned at an angle to the light/image projection axis, when used in a projector display apparatus. The light may be refracted through the input surface of the optical substrate as normal but is then reflected inside the angled fibres. Therefore most rays are intersecting the fibres at an angle which causes most rays to be projected out as an annular projected light field. The effect of angling the fibres therefore increases the effective diffusion properties of the device. In addition, the angle on the fibres selectively projects the output light field to one side, i.e. not at right angles to the output face of the substrate. This has the advantage of producing two effects with one refracting and reflecting device:
1) The angle of rays projected outwards is spread over a larger range of angles, i.e. they are diffused to a greater extent
2) The rays projected outwards are offset (in angle) to one side

Since this is based on a process of refraction or reflection, it is relatively stable with respect to variation in colour of the projected light.

Further flexibility in designing the output beam far field pattern 11 may be achieved by adding a diffusing coating to the input face 5, output face 6, or both faces.

The diffusing coating(s) may be a diffraction grating. These have the advantage of deviating rays of light into multiple diffracted orders from only small features in the diffraction grating. Therefore, the small features preferably may have minimal effect on the perceived image bearing information.

These diffraction gratings may be selected and arranged so as to deviate the rays impinging on them in one direction only (which in this description are called 'linear diffraction gratings' for convenience), or so as to deviate them in multiple directions. The linear diffraction gratings are well known and simpler to produce. A further advantage of embodiments of the invention is that, by placing a so-called linear diffraction grating on the input face 5 of the optical diffuser, the action of the angled fibres translates the single direction of diffraction into a conical far field light pattern. In conjunction with the other effects within the optical diffuser, as described above, this results in a wider far field pattern 11. Alternatively, or additionally, a so-called linear diffraction grating may be placed on the output face 6 of the optical diffuser, such that the far field light pattern 11 is extended in one direction only. The overall effect, in conjunction with the other effects in the optical diffuser, will be to create a substantially elliptical far field pattern 11. A diffraction grating could be placed on both the input face 5 and the output face 6 of the optical diffuser.

The implementation of diffusing coatings on the input face 5 or output face 6 therefore enables a more flexible geometry in the design of the far field light pattern 11 for a given angle of fibres.

The optical sub-systems shown as 16 and 18 in Figure 6 may have optical aberrations within them that image the information bearing light onto non-flat surfaces. In the case of the projection optics 18, a person skilled in the art will be readily able to model the optical sub-system by tracing light backwards from the eye to the optical diffuser 1. The design of such an optical sub-system in that way may be improved if the output face 6 is curved. The ability to grind and polish curved surfaces on the input face 5 or output face 6 will therefore be advantageous in reducing the complexity of the optical sub-systems 16 and 18 whilst maintaining a high level of information bearing capability in their design.

Preferred embodiments of the invention may be configured to suit the output or input projection optics by employing variations in the geometry of the fibre array.

For example, in some embodiments the fibre optical plate may be fabricated from fibre arrays whose fibres have a shape that is not cylindrical, but of other geometries, such as, but not exclusively, rectangular, hexagonal and elliptical in cross-sectional shape.

The shape of the far field illumination pattern formed by the optical fibres of the plate (e.g. pattern 11) is affected by the internal shape of the fibres as it also affects the geometry of reflected rays within the fibre. As a rule, the angle of a ray inside the fibre relative to the optical axis of the fibre (e.g. θ₂ in Figure 5) is equal to the output angle within the fibre (e.g. θ₂ in Figure 5). It is related to the refracted output angle (θ₃ of Figure 5). This rule still holds if the fibres are substantially the same shape (cross-sectional) throughout their length. Therefore, the mode of operation described above in relation to fibres of circular cross-sectional shape, is substantially retained. Most preferably, the illumination beam (e.g. beam 7 of Figure 5) is adapted from a single angle (θ₁) to a cone of light incident on the fibre.

The illumination beam and fibre shape may be designed by using a ray tracing model as shown in Figure 7A, where the fibre 23 is changed as desired to represent the cross-sectional shape of the fibre being modelled. Suitable ray tracing software is generally known as 'non-sequential' and commercially available packages include the ability to trace rays through extruded shapes of general form. The size of the fibre can be specified in such software packages so as to be larger than in real life, but by restricting the analysis to the far field, this does not affect the results. The angular characteristics of the illumination beam from a source (e.g. source 22) may be adjusted to match the internal reflections of the fibre 23 to achieve the optimum far field illumination pattern 11 as measured by the detector 24.

In another example, the fibre array may be modified so that the input plate face is a different size from the output plate face but with the same number of fibre ends presented at each face. The geometry is achieved by varying the size of the fibres and their spacing, through the depth of the fibre array. Fibre-optical plates with these geometries are readily available. As the size of the fibres is varied, so the output far field light pattern 11 varies by the inverse ratio. By varying the size of the fibres differently in different directions, the output far field light pattern may be made rotationally non-symmetrical. Either of these effects may be employed in embodiments of this invention to adjust/control/arrange the geometry of the far field light pattern 11 as desired.

In another example, fibres of the fibre array in a fibre-optical plate may be twisted, e.g. through 180 degrees so as to change the image orientation. In yet another example, fibres of the fibre array in a fibre-optical plate may be bent with the advantage of fitting the optical path into a specific space envelope. Fibre-optical plates with such arrays are readily available from manufacturers of fibre-optical face plates and the like..

## Claims

1. An optical diffuser including a fibre-optical piece comprising:
a first face and a second face;
a plurality of substantially parallel optical fibres each extending along a respective optical axis from an input end of the optical fibre exposed at the first face of the fibre-optical piece to an output end of the optical fibre exposed at the second face of the fibre-optical piece;
wherein said optical axes of each of said plurality of optical fibres are inclined at a common oblique angle relative to at least one of the first face of the fibre-optical piece and the second face of the fibre-optical piece, such that light incident substantially perpendicularly upon the at least one said face of the fibre-optical piece enters said optical fibres in a direction oblique to said optical axes.

2. An optical diffuser according to any preceding claim in which said input end of each said optical fibre presents a substantially plane input face which is substantially parallel to said first face of the fibre-optical piece.

3. An optical diffuser according to any preceding claim in which said output end of each said optical fibre presents a substantially plane output face which is substantially parallel to said second face of the fibre-optical piece.

4. An optical diffuser according to any preceding claim in which said first face of the fibre-optical piece is substantially plane and said second face of the fibre-optical piece is substantially plane.

5. An optical diffuser according to claim 4 in which said first face of the fibre-optical piece is substantially parallel to said second face of the fibre-optical piece.

6. An optical diffuser according to any preceding claim in which said input end of each said optical fibre presents a substantially plane input face, and said output end of each said optical fibre presents a substantially plane output face which is substantially parallel to said input face thereof.

7. An optical diffuser according to any preceding claim in which said input end of each one of said optical fibres presents a substantially plane input face which is substantially parallel to a said input face of each of the other said optical fibres.

8. An optical diffuser according to any preceding claim in which said output end of each one of said optical fibres presents a substantially plane output face which is substantially parallel to a said output face of each of the other said optical fibres.

9. An optical diffuser according to any preceding claim in which said plurality of substantially parallel optical fibres are fixed together side-by-side.

10. A projection display apparatus comprising:
a light source means for generating light to be displayed;
an optical diffuser according to any preceding claim arranged to receive at said first face of the fibre-optical piece said light from said light source and for outputting said light from said second face of the fibre-optical piece, for display by projection.

11. A projection display apparatus according to claim 11 wherein:
the light source means defines a display optical axis along which said generated light is transmitted to the optical diffuser; and,
the projection display apparatus includes projection optical means defining a projection optical axis and arranged for receiving said output light from said second face of the fibre-optical piece of the optical diffuser and for projecting the received light for display by projection;
wherein the projection optical axis is oblique to the display optical axis.

12. A helmet-mounted display comprising an optical diffuser according to any of claims 1 to 10, or a projection display apparatus according to any of claims 11 to 13.

13. A method of diffusing light using an optical diffuser, the method comprising:
providing a fibre-optical piece including a first face and a second face between which extend a plurality of substantially parallel optical fibres each extending along a respective optical axis from an input end of the optical fibre exposed at the first face of the fibre-optical piece to an output end of the optical fibre exposed at the second face of the fibre-optical piece wherein said optical axes of each of said plurality of optical fibres are inclined at a common oblique angle relative to at least one of the first face of the fibre-optical piece and the second face of the fibre-optical piece;
directing light so as to be incident upon the at least one said face of the fibre-optical piece to enter said optical fibres in a direction oblique to said optical axes thereby to provide said light in diffused form at the second face of the fibre-optical piece.

14. A method of projecting light for display comprising:
generating light to be displayed;
transmitting said light along a display optical axis to an optical diffuser according to any of claims 1 to 10;
receiving said transmitted light at said first face of the fibre-optical piece of the optical diffuser;
outputting said light from said second face of the fibre-optical piece thereof in a direction along a projection optical axis towards a projection optical means which defines the projection optical axis to be oblique to the display optical axis; and,
receiving at the projection optical means said output light from said second face of the fibre-optical piece and projecting the received light for display by projection;
projecting said light upon a projection screen or a mirror for display thereat or reflection therefrom.

15. A method for manufacturing an optical diffuser comprising:
providing a fibre-optical face plate comprising a plurality of substantially parallel optical fibres each extending along a respective optical axis from an input end of the optical fibre exposed at a first face of the face plate to an output end of the optical fibre exposed at the second face of the face plate;
re-shaping at least one of the first face and said second face such that said optical axes of each of said plurality of optical fibres are inclined at a common oblique angle relative to the at least one of the first face and the second face, such that light incident substantially perpendicularly upon the re-shaped at least one said face enters said optical fibres in a direction oblique to said optical axes.
